# FASCICULE DE BREVET EUROPEEN

(11) **EP 3 483 669 B1**
(45) Date de publication et mention de la délivrance du brevet: **30.12.2020**
(21) Numéro de dépôt: 17200597.7
(22) Date de dépôt: 08.11.2017
(51) Int. Cl.: G04B 37/10

(54) **SOUPAPE DE SÉCURITÉ POUR MONTRE**
SICHERHEITSVENTIL FÜR ARMBANDUHR
SAFETY VALVE FOR A WATCH

(43) Date de publication de la demande: 15.05.2019
(73) Titulaire: Omega SA, 2502 Bienne (CH)
(72) Inventeur: PODVIN, Pierre, 1110 Morges (CH); BAEBLER, Jean, 3073 Gümlingen (CH)
(74) Mandataire: ICB SA

(56) Documents cités:
- EP-A1- 0 554 797
- EP-A1- 0 884 660
- EP-A2- 2 166 420
- US-B1- 6 200 020

## Description

### Domaine technique

La présente invention se rapporte à une soupape de sécurité pour une pièce d'horlogerie notamment une montre bracelet et plus précisément pour une montre bracelet destinée à la plongée sous-marine. La présente invention se rapporte également à la pièce d'horlogerie munie de ladite soupape.

### Arrière-plan technologique

Les soupapes à hélium, aussi appelées valves à hélium, sont présentes sur certaines montres de plongée pour évacuer l'hélium infiltré dans le boitier de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise.

Dans l'état de la technique, on connaît les soupapes à hélium manuelles qui fonctionnent simplement en serrant/desserrant un élément d'étanchéité comme une tête de soupape, à la façon d'une couronne vissée sur un tube chassé ou vissé sur la carrure. Le document EP 0 554 797 A1 décrit par exemple une telle soupape. De telles soupapes comprennent classiquement un piston relié à la tête de soupape qui est apte à exercer une pression sur un joint d'étanchéité en coopérant avec un ressort afin de réguler la pression à l'intérieur du boitier de montre.

Toutefois un des inconvénients majeurs de telles soupapes manuelles réside dans une altération possible de l'étanchéité du boitier de montre lorsque ces soupapes sont dans une configuration d'ouverture dans laquelle la tête de soupape est desserrée. En effet, dans une telle configuration, dès lors qu'une force radiale ou sensiblement radiale, pouvant résulter d'un choc, est appliquée à la tête de soupape, elle a alors pour effet d'engendrer un désaxage du piston provoquant une réduction de la pression exercée par le piston sur le joint d'étanchéité et donc une perte d'étanchéité du boitier de montre.

### Résumé de l'invention

Un but de la présente invention est de pallier les inconvénients de l'art antérieur en proposant une soupape dans laquelle le piston est dissocié de la tête de soupape tout en fournissant des moyens assurant une solidarisation de la tête de soupape avec le tube, une telle tête de soupape pouvant être aisément manipulée lors des opérations de serrage/desserrage.

À cet effet, la présente invention porte sur une soupape de sécurité pour pièce d'horlogerie, notamment pour une montre de plongée, comprenant un canal d'évacuation agencé pour pouvoir être en communication fluidique avec l'intérieur d'un boitier de ladite pièce d'horlogerie lorsque cette soupape est dans une configuration ouverte afin d'évacuer un excès de fluide, notamment d'un fluide gazeux, ladite soupape comportant :
- un tube destiné à être fixé dans le boitier de la pièce d'horlogerie ;
- une tête de soupape pourvue d'un couvercle et d'une jupe axiale qui est apte à être placée dans différentes positions axiales par rapport audit tube ;
- un module de régulation de pression dissocié de la tête de soupape agencé à l'intérieur d'un conduit fluidique ménagé dans le tube ;
- des éléments de guidage axial par vissage définis dans la tête de soupape et le tube participant au pilotage du déplacement de la tête de soupape relativement au tube dans les différentes positions axiales,
ladite soupape de sécurité comprenant des éléments de blocage empêchant une désolidarisation entre la tête de soupape et ledit tube, lesquels éléments de blocage étant compris dans une paroi interne ou externe du tube et dans la tête de soupape.

Grâce à ces caractéristiques, on élimine notamment l'effet lié à l'application d'une force radiale ou sensiblement radiale sur la tête de soupape et donc les risques de pertes d'étanchéité de la soupape et donc du boitier de montre.

Dans d'autres modes de réalisation :
- les éléments de blocage comprennent une butée comprise dans la paroi interne du conduit fluidique dudit tube et un organe de contrôle de la course de la tête de soupape prévu pour coopérer avec ladite butée lorsque la tête de soupape est déplacée relativement au tube notamment afin d'empêcher une désolidarisation entre la tête de soupape et ledit tube ;
- l'organe de contrôle de la course de la tête de soupape est un élément rapporté au corps de cette tête de soupape qui est relié mécaniquement à une paroi intérieure d'un élément central de liaison de cette tête de soupape ;
- la butée est venue de matière avec la paroi interne du conduit fluidique dudit tube ;
- la butée est comprise dans une pièce rapportée fixée sur une paroi interne du conduit fluidique dudit tube ;
- les éléments de blocage sont compris dans la paroi externe du tube et dans la jupe axiale de la tête de soupape ;
- les éléments de blocage comprennent une bague de maintien de forme annulaire et un épaulement circulaire, ledit épaulement étant pourvu d'une surface d'appui contre laquelle ladite bague est susceptible de venir en buté ;
- la bague de maintien est comprise dans une rainure de forme complémentaire définie dans la jupe axiale lorsque l'épaulement circulaire est compris dans la paroi externe du tube ;
- la bague de maintien est comprise dans une rainure de forme complémentaire définie dans la paroi externe du tube lorsque l'épaulement circulaire est compris dans la jupe axiale ;
- les éléments de guidage axial comprennent des première et deuxième zones de guidage définies en tout ou partie respectivement dans un élément central de liaison compris dans le couvercle de la tête de soupape et dans la paroi interne du conduit fluidique du tube notamment dans un compartiment supérieur de ce conduit ;
- les éléments de guidage axial comprennent des première et deuxième zones de guidage définies en tout ou partie respectivement dans un élément central de liaison compris dans le couvercle de la tête de soupape et dans une pièce rapportée fixée sur une paroi interne du conduit fluidique dudit tube ;
- les première et deuxième zones de guidage sont aptes à être en prise par vissage pour une configuration ouverte ou fermée de ladite soupape ;
- le module de régulation de pression comprend un piston et un organe élastique, ledit piston étant logé à l'intérieur du conduit fluidique du tube et l'organe élastique étant agencé dans ledit conduit fluidique afin de coopérer avec le piston, lequel piston étant configuré pour se déplacer axialement au gré des variations de pression à l'intérieur du boitier ;
- le module de régulation de pression comprend un élément d'étanchéité situé dans le conduit fluidique entre des premier et deuxième éléments de fixation, ledit élément d'étanchéité comportant une membrane agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier, et
- la soupape comprend un indicateur visuel d'une positon axiale de la tête de soupape relativement au tube, notamment d'une première ou d'une seconde position axiale de cette tête de soupape.

L'invention propose aussi une pièce d'horlogerie comprenant une telle soupape de sécurité.

### Brève description des figures

D'autres caractéristiques et avantage de la présente invention apparaîtrons à la lecture des modes de réalisation de l'invention donnés uniquement à titre d'exemple non limitatif et décrits en référence aux dessins annexés dans lesquels :
- la figure 1 est une vue en demi-coupe d'une soupape de sécurité susceptible d'être montée sur une carrure d'un boitier de montre dans une configuration fermée comprenant un module de régulation de pression pourvu d'un piston, selon un premier mode de réalisation de l'invention ;
- la figure 2 représente une vue similaire à la figure 1 dans laquelle la soupape de sécurité est dans une configuration ouverte, selon le premier mode de réalisation de l'invention ;
- la figure 3 est une vue en demi-coupe d'une soupape de sécurité susceptible d'être montée sur la carrure du boitier de montre dans une configuration ouverte comprenant un module de régulation de pression pourvu d'un piston, selon un deuxième mode de réalisation de l'invention ;

- la figure 4 est une vue en coupe d'une soupape de sécurité susceptible d'être montée sur une carrure du boitier de montre dans une configuration fermée comprenant un module de régulation de pression pourvu d'un piston, selon un troisième mode de réalisation de l'invention ;
- la figure 5 représente une vue similaire à la figure 4 dans laquelle la soupape de sécurité est dans une configuration ouverte, selon le troisième mode de réalisation de l'invention ;
- la figure 6 est une vue en demi-coupe d'une soupape de sécurité susceptible d'être montée sur une carrure d'un boitier de montre dans une configuration fermée comprenant un module de régulation de pression pourvu d'un élément d'étanchéité comportant une membrane, selon un quatrième mode de réalisation de l'invention ;
- la figure 7 représente une vue similaire à la figure 6 dans laquelle la soupape de sécurité est dans une configuration ouverte, selon le quatrième mode de réalisation de l'invention ;
- la figure 8 représente une vue coupe de la soupape de sécurité visible sur la figure 5 qui est traversée par un fluide circulant dans une canalisation d'évacuation, selon le troisième mode de réalisation de l'invention, et
- la figure 9 représente la pièce d'horlogerie comprenant une telle soupape de sécurité.

### Description détaillée de l'invention

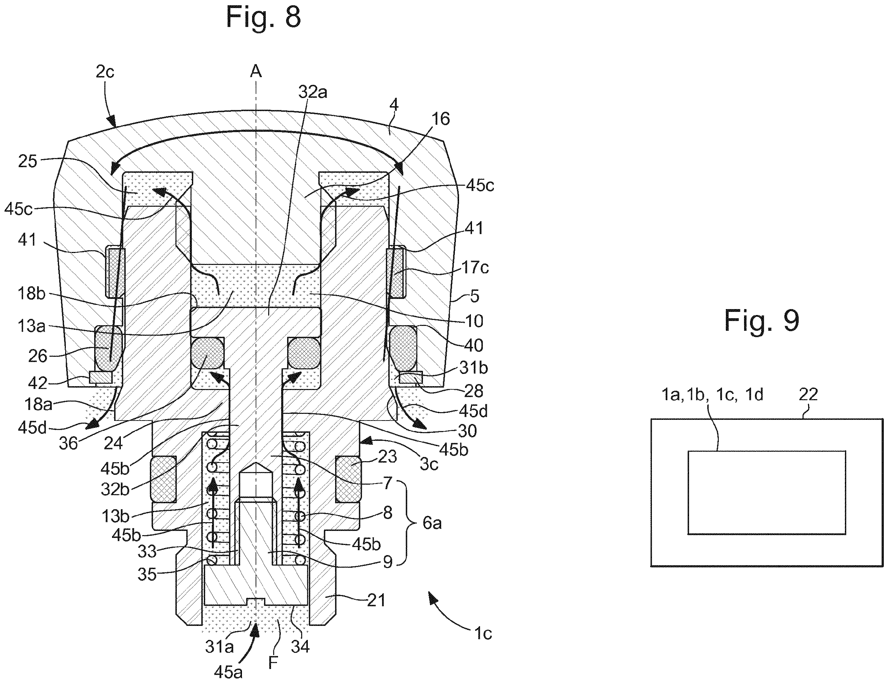

La présente invention se rapporte à une soupape permettant d'évacuer un excès de fluide F de préférence gazeux tel que de l'hélium présent dans un boitier d'une pièce d'horlogerie 22 illustrée sur la figure 9. Une telle soupape est également appelée soupape à hélium ou encore soupape de sécurité pour une pièce d'horlogerie 22 et notamment pour une montre de plongée. Cette soupape est désignée par la référence générale 1a, 1b, 1c, 1d, aux dessins.

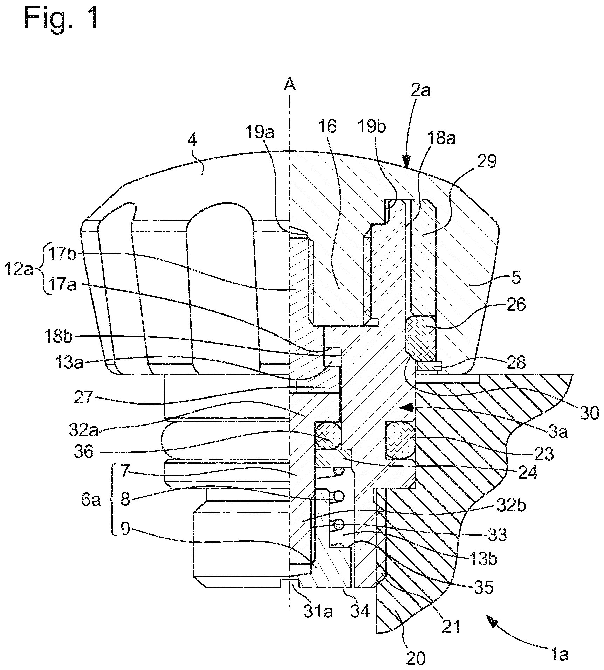

Dans les quatre modes de réalisation de la soupape de sécurité 1a à 1d représentés sur les figures 1 à 8, cette soupape 1a à 1d comprend un tube 3a, 3b, 3c, 3d destiné à être fixé sur le boitier de montre par vissage ou chassage dans la carrure 20 de ce boitier. Lorsque ce tube 3a à 3d est vissé à la carrure, il comporte une zone filetée 21 définie dans une portion inférieure comprise dans cette carrure 20. Ce tube 3a à 3d présente dans sa partie médiane un renflement muni d'une gorge dans laquelle est logé un joint torique 23 assurant son étanchéité au niveau de la carrure 20. Dans l'exemple illustré, le tube 3a à 3d est terminé par une portion supérieure émergeante de la carrure 20, prévue pour être coiffée par une tête de soupape 2a, 2b, 2c, 2d. Il va de soi que selon une variante de réalisation le tube 3a à 3d peut être noyé dans la carrure 20.

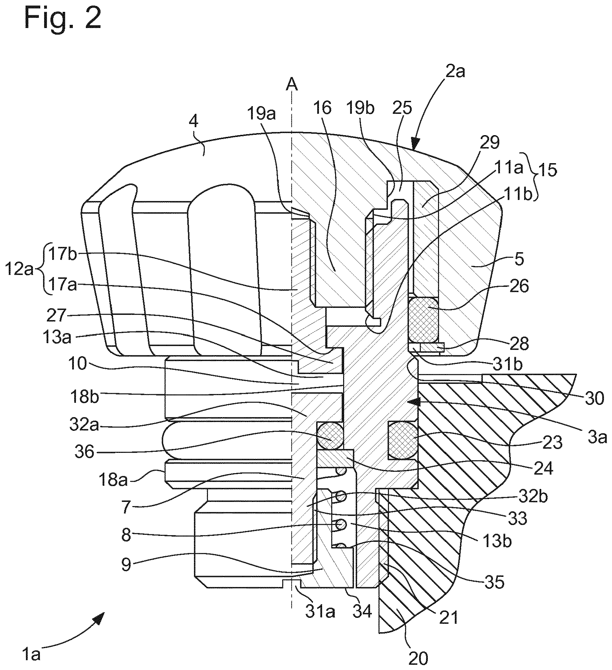

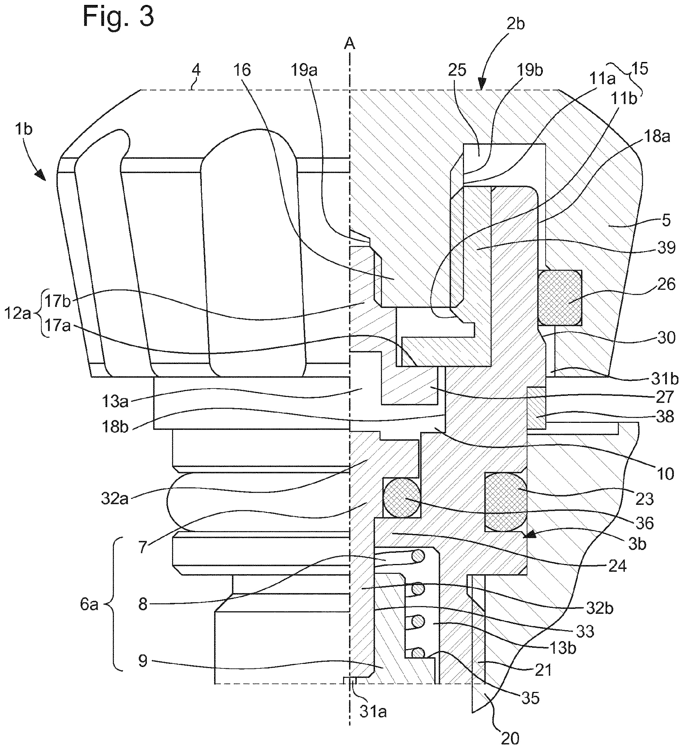

Dans les premier, deuxième et troisième modes de réalisation de soupape de sécurité 1a, 1b, 1c illustrés sur les figures 1 à 5, le tube 3a, 3b, 3c comprend un conduit fluidique 10. Ce conduit fluidique 10 est pourvu d'une portée intérieure 24 délimitant un compartiment supérieur 13a d'un compartiment inférieur 13b de ce conduit 10, le compartiment inférieur 13b comprenant un canal relié à l'intérieur du boitier. On notera que cette portée 24 peut être une pièce rapportée (visible sur les figures 1, 2) ou peut venir de matière avec une paroi interne 18b du tube 3a, 3b, 3c (visible sur les figures 3, 4, 5).

Dans les différents modes de réalisation de la soupape 1a à 1d, la tête de soupape 2a à 2d présente un corps de forme générale cylindrique. Cette tête de soupape 2a à 2d comprend un couvercle 4 et une jupe axiale 5 présentant une symétrie de révolution autour d'un axe de rotation A de cette tête de soupape 2a à 2d. Ce couvercle 4 et la jupe axiale 5 définissent une cavité 25 dans la tête de soupape 2a à 2d.

Dans cette tête de soupape 2a à 2d, le couvercle 4 comprend un élément central de liaison 16 faisant saillie d'une face interne de ce couvercle 4 en s'étendant axialement dans cette cavité 25 selon une direction de l'axe A. Dans cette configuration, un tel élément central de liaison 16 est donc solidaire du couvercle 4 et a de préférence une section transversale perpendiculaire à l'axe A qui est circulaire. Sur les figures 1 à 3, 6 et 7 portant sur les premier, deuxième et quatrième modes de réalisation de la soupape 1a, 1b, 1d, cet élément central de liaison 16 peut former un canon central en ayant la forme d'un cylindre creux prévu pour le montage dans la tête de soupape 2a, 2b, 2d d'un organe de contrôle 17b de la course de cette tête de soupape 2a, 2b, 2d. Un tel organe de contrôle 17b de la course de la tête de soupape 2a, 2b, 2d est un élément rapporté au corps de cette tête de soupape 2a, 2b, 2d. Cet organe de contrôle 17b est relié mécaniquement à une paroi intérieure 19a de l'élément central de liaison 16 au niveau d'une de ses extrémités et ce, par exemple par vissage.

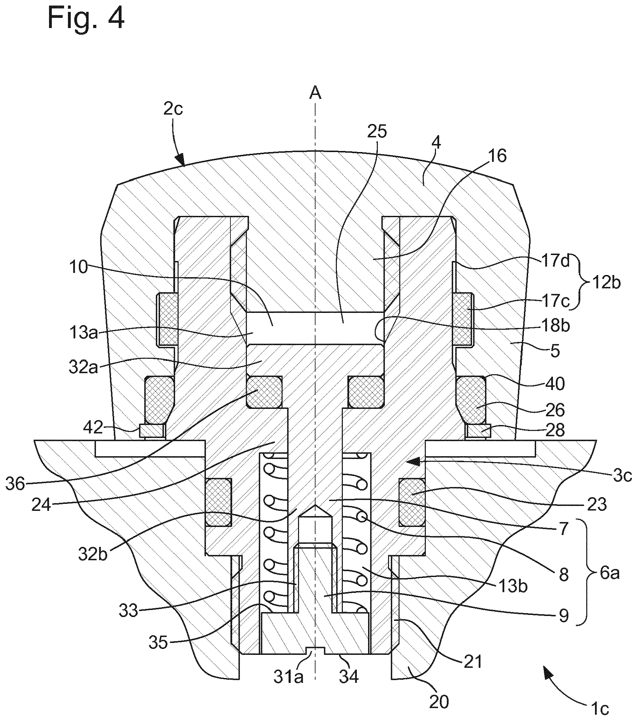

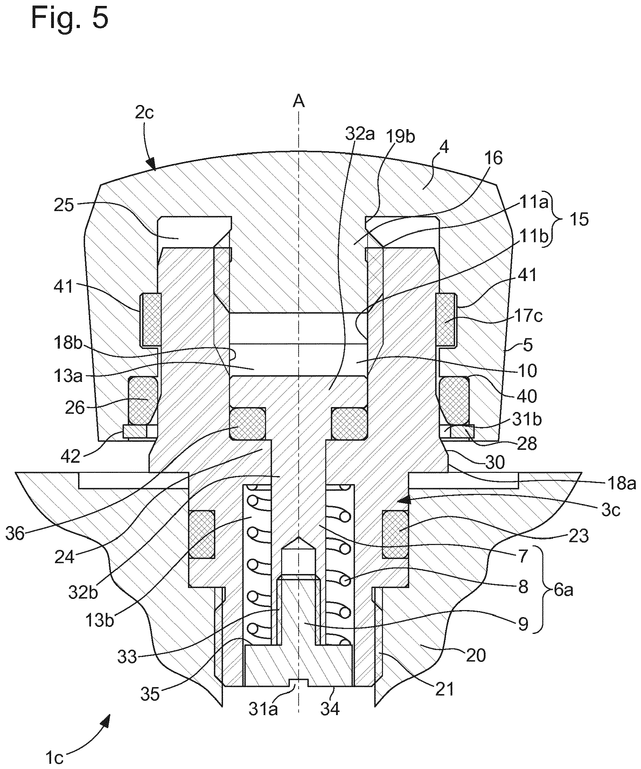

La soupape de sécurité 1a à 1d comporte par ailleurs un joint d'étanchéité 26 interposé entre la jupe axiale 5 de la tête de soupape 2a à 2d et le tube 3a à 3d de manière à garantir l'étanchéité de cette soupape de sécurité 1a à 1d. Dans ce contexte, ce joint d'étanchéité 26 est un joint torique. Sur les figures 1, 2, 6 et 7 relatives aux premier et quatrième modes de réalisation de cette soupape de sécurité 1a, 1d, ce joint d'étanchéité 26 est maintenu axialement entre une entretoise 29 positionnée contre une paroi intérieure de la jupe axiale 5 de la tête de soupape 2a, 2d et une bague de maintien 28. Cette bague de maintien 28 de forme annulaire est fixée, par exemple par chassage, dans une rainure 42 de forme correspondante se trouvant vers la base de la jupe axiale 5 en regard de la paroi externe 18a du tube 3a, 3d. Selon une variante, l'entretoise 29 et/ou la bague de maintien 28 peuvent venir de matière avec la jupe axiale 5. Sur la figure 3 relative au deuxième mode de réalisation de la soupape de sécurité 2b, un tel joint 26 est agencé dans une rainure réalisée dans la jupe axiale 5. Sur les figures 4 et 5 relatives au troisième mode de réalisation de la soupape de sécurité 1c, un tel joint 26 est agencé entre un épaulement circulaire 40 réalisé dans la jupe axiale 5 et une bague de maintien 28 de forme annulaire.

Dans ces différents modes de réalisation, lorsque la soupape de sécurité 1a à 1d est dans une configuration fermée visible sur les figures 1, 4 et 6, le joint d'étanchéité 26 est surcompressé par un renflement 30 du tube 3a à 3d de telle sorte que les propriétés d'étanchéité soient les meilleures possibles.

Dans cette soupape 1a à 1d, la tête de soupape 2a à 2d peut être configurée dans des première et seconde positions axiales. Plus précisément, dans la première position axiale représentée sur les figures 1, 4 et 6, la soupape 1a à 1d est alors dans une configuration fermée, avec une tête de soupape 2a à 2d fermant de manière hermétique le conduit fluidique 10 du tube 3a à 3d de sorte à empêcher ainsi toute circulation de fluide F dans la soupape de sécurité 1a à 1d. Dans la seconde position axiale représentée sur les figures 2, 3, 5, 7 et 8, la soupape 1a à 1d est dans une configuration ouverte avec la tête de soupape 2a à 2d qui n'obture plus ce conduit fluidique 10.

La soupape de sécurité 1a à 1d comprend aussi des éléments de guidage axial 15 permettant de contrôler le déplacement axial de la tête de soupape 2a à 2d relativement au tube 3a à 3d afin de configurer cette tête 2a à 2d dans l'une ou l'autre de ses positions axiales. Ces éléments de guidage 15 comportent des première et deuxième zones de guidage 11a, 11b définies en tout ou partie respectivement dans une paroi extérieure 19b de l'élément central de liaison 16 compris dans le couvercle 4 de la tête de soupape 2a à 2d, et dans la paroi interne 18b du conduit fluidique 10 du tube 3a à 3d. Dans les premier, deuxième et troisième modes de réalisation, cette deuxième zone de guidage 11b est comprise dans la paroi interne 18b du compartiment supérieur 13a du conduit fluidique 10. On notera en particulier que dans le deuxième mode de réalisation, cette deuxième zone de guidage 11b est comprise dans une pièce rapportée 39 fixée sur la paroi interne 18b du conduit fluidique 10. Chacune de ces première et deuxième zones de guidage 11a, 11b comprend un filetage visant à ce que la tête de soupape 2a à 2d soit toujours en prise avec le tube 3a à 3d lors de la configuration ouverte ou fermée de ladite soupape 1a à 1d. Dans ce contexte, la soupape de sécurité 1a à 1d peut être paramétrée de la configuration fermée à la configuration ouverte par un dévissage de la tête de soupape 2a à 2d, l'opération inverse devant être réalisée pour le passage de la configuration ouverte à la configuration fermée.

Cette soupape de sécurité 1a à 1d comprend également des éléments de blocage 12a, 12b empêchant une désolidarisation entre la tête de soupape 2a à 2d et le tube 3a à 3d notamment lorsque la tête de soupape 2a à 2d est dans la seconde position axiale. Dans cette soupape 1a à 1d, les éléments de blocage 12a, 12b sont compris dans une paroi externe ou interne 18a, 18b du tube 3a à 3d ainsi que dans la tête de soupape 2a à 3d.

Plus précisément, dans les premier, deuxième et quatrième modes de réalisation, les éléments de blocage 12a comprennent une butée 17a autrement appelée « butée de limitation de course de la tête de soupape ». Cette butée 17a est comprise dans la paroi interne 18b du conduit fluidique 10 du tube 3a, 3b, 3d. Ces éléments de blocage 12a comprennent aussi l'organe de contrôle 17b de la course de la tête de soupape 2a, 2b, 2d évoqué précédemment et qui est prévu pour coopérer avec la butée 17a lorsque la tête de soupape 2a, 2b, 2d est déplacée relativement au tube 3a, 3b, 3d pour être dans la seconde position axiale afin de paramétrer la soupape 1a, 1b, 1d dans sa configuration ouverte. On notera que dans les premier et quatrième modes de réalisation, cette butée 17a est venue de matière avec la paroi interne 18b du conduit fluidique 10 du tube 3a, 3d (visible sur les figures 1, 2, 6 et 7) ou peut comme dans le deuxième mode de réalisation être comprise dans la pièce rapportée 39 qui est fixée sur une paroi interne 18b de ce conduit fluidique 10 et qui comporte également la deuxième zone de guidage 11b (visible sur la figure 3).

Dans le troisième mode de réalisation de cette soupape de sécurité illustré sur les figures 4 et 5, les éléments de blocage 12b comprennent une bague de maintien 17c de forme annulaire et un épaulement circulaire 17d. Cette bague 17c présente une section transversale de forme essentiellement rectangulaire et est de préférence comprise dans une rainure 41 de forme complémentaire définie dans la jupe axiale 5. Cette rainure 41 est de préférence située dans une partie centrale de la jupe axiale 5. S'agissant de l'épaulement circulaire 17d, il est compris dans la paroi externe 18a du tube 3c et comprend une surface d'appui contre laquelle la bague 17c peut venir en buté. Dans une variante de ce mode de réalisation, la bague 17c peut être comprise dans une rainure de forme complémentaire définie dans la paroi externe 18a du tube 3a et l'épaulement circulaire 17d défini dans la jupe axiale 5.

Dans ces modes de réalisation, une telle soupape de sécurité 1a à 1d comprend un canal d'évacuation agencé pour pouvoir être en communication fluidique avec l'intérieur du boitier lorsque la soupape 1a à 1d est dans sa configuration ouverte afin d'évacuer l'excès de fluide F. Ce canal d'évacuation comprend le conduit fluidique 10 défini dans le tube 3a à 3d et un passage fluidique compris entre la paroi externe 18a de ce tube 3a à 3d et une paroi intérieure de la jupe axiale 5 de la tête de soupape 2a à 2d. Ce canal d'évacuation comprend une entrée 31a comprise au niveau d'une ouverture définie dans la portion inférieure du tube 3a à 3d et une sortie 31b comprise entre la paroi intérieure de la base de la jupe axiale 5 et la paroi externe 18a du tube 3a à 3d.

En outre, dans ces modes de réalisation, la soupape de sécurité 1a à 1d comprend aussi un module de régulation de pression 6a, 6b qui est dissocié de la tête de soupape 2a à 2d. En particulier, dans les premier, deuxième et troisième modes de réalisation, le module de régulation de pression 6a de la soupape de sécurité 1a, 1b, 1c comprend un piston 7, un organe élastique 8 et un organe d'activation du piston 9. Dans ce module de régulation de pression 6a, le piston 7 est logé dans le conduit fluidique 10 défini dans le tube 3a, 3b, 3c. Ce piston 7 qui est monté coulissant dans ce tube 3a, 3b, 3c, a une forme essentiellement cylindrique et comprend deux parties 32a, 32b. La première partie 32a comprend une tête du piston qui est agencée dans le compartiment supérieur 13a du conduit fluidique 10 du tube 3a, 3b, 3c et qui est apte à coopérer avec la paroi interne 18b de ce compartiment 13a afin de contribuer au guidage du piston 7 lors de ses déplacements dans ce conduit 10. S'agissant de la deuxième partie 32b, elle est positionnée à la fois dans une ouverture centrale ménagée dans la portée intérieure 24 et dans le compartiment inférieur 13b du conduit fluidique 10. Cette deuxième partie 32b du piston 7 comprend une extrémité libre prévue pour recevoir l'organe d'activation 9 du piston 7.

Un tel organe d'activation 9 est destiné à être en contact avec le fluide F. Il comprend une composante de liaison 33 permettant d'assurer sa fixation à l'extrémité libre de la deuxième partie 32b du piston 7. Cette composante liaison 33 peut avoir une forme cylindrique et comporter sur sa paroi interne une partie filetée vissée dans une partie taraudée de cette extrémité libre de la deuxième partie 32b du piston 7. Cet organe d'activation 9 comprend une face d'appui 34 sur laquelle le fluide F provenant du boitier est susceptible d'exercer une force de pression. Cette face d'appui 34 est apte à obstruer partiellement voire totalement l'entrée 31a du canal d'évacuation.

Dans ce module de régulation de pression 6a, l'organe élastique 8, par exemple un ressort de compression du type hélicoïdal, est apte à être traversé par la deuxième partie 32b du piston 7 en étant agencé dans le compartiment inférieur 13b du conduit fluidique 10 du tube 3a, 3b, 3c. Dans ce compartiment inférieur 13b, le ressort comprend des première et deuxième extrémités qui sont respectivement en appui sur la portée intérieure 24 et sur une face de support 35 de l'organe d'activation 9 qui peut être parallèle à la face d'appui 34. Dans ce compartiment inférieur 13b, le ressort est monté compressé axialement entre la portée intérieure 24 et la face de support 35 de manière à ce que la tête du piston 32a puisse pincer un joint torique 36 contre la portée intérieure 24 afin d'assurer l'étanchéité de la soupape de sécurité 1a, 1b, 1c.

Ainsi dans cette configuration, en présence d'une surpression à l'intérieur du boitier, le fluide F, en l'occurrence l'hélium gazeux vient en contact avec la face d'appui 34 de l'organe d'activation 9. Dans la mesure où la force de pression exercée sur la face d'appui 34 est supérieure ou égale à une force de pression seuil d'activation de la soupape de sécurité 1a, 1b, 1c, l'organe d'activation 9 provoque un déplacement du piston 7 allant à l'encontre d'une force de rappel élastique du ressort entraînant alors sa déformation et un passage du fluide F du compartiment inférieur 13b vers le compartiment supérieur 13a via l'ouverture centrale de la portée 24 pour une évacuation de ce fluide F par la sortie 31b du canal d'évacuation. Cette force de pression seuil qui induit l'activation/le déclenchement de la soupape de sécurité 1a, 1b, 1c, peut être adaptée aux circonstances d'utilisation de la soupape 1a, 1b, 1c, cette adaptation étant réalisée par le choix d'une raideur du ressort de compression et/ou d'une configuration des dimensions de la surface de la face d'appui 34 de l'organe d'activation 9 du piston 7.

Dans cette configuration, on notera que le sommet de la première partie 32a du piston 7 formant la tête de ce piston peut avoir une forme complémentaire (par exemple un carré) à celle d'une partie d'une extrémité libre 27 (en creux) de l'organe de contrôle 17b agencée en regard de ce sommet afin d'être solidarisables temporairement en rotation et ce, afin de faciliter le montage de cet organe de contrôle 17b et du piston 7 dans la soupape de sécurité 1a, 1b, 1c lors d'un assemblage d'une telle soupape 1a, 1b, 1c.

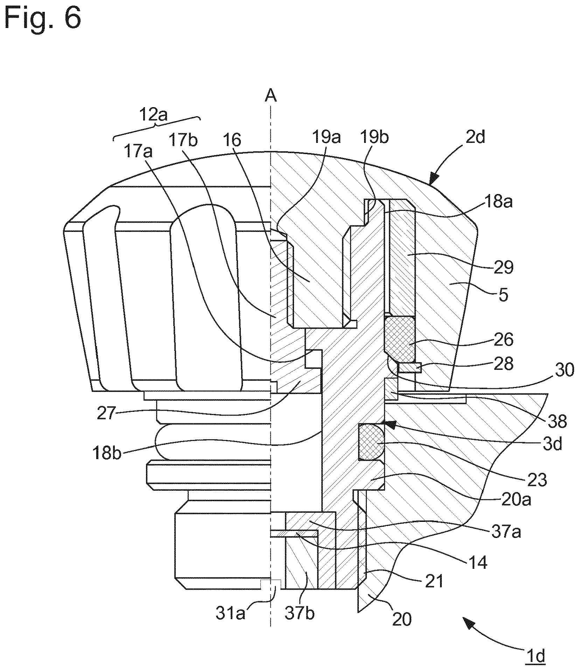

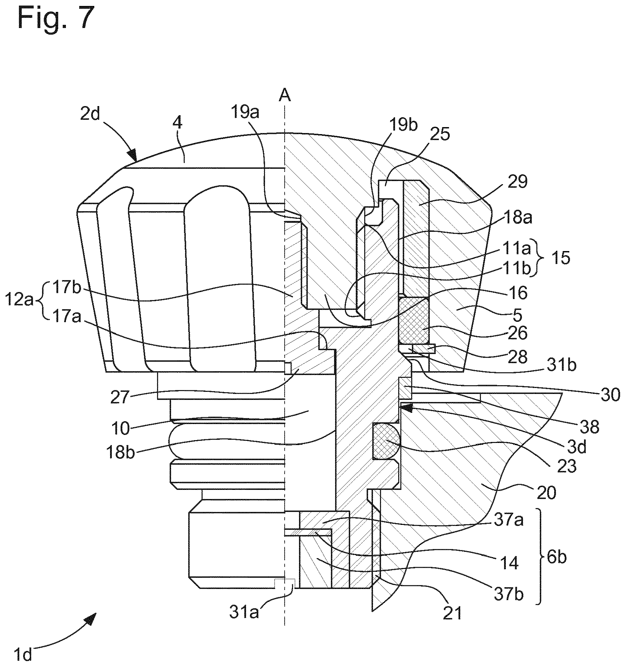

Dans le quatrième mode de réalisation visible sur les figures 6 et 7, le module de régulation de pression 6b comprend un élément d'étanchéité 14 situé dans le conduit fluidique 10 à proximité voire dans l'entrée 31a de la canalisation d'évacuation. Cet élément d'étanchéité 14 est agencé dans ce conduit fluidique 10 de manière à obturer ce dernier. Cet élément d'étanchéité 14 comprend une membrane 14 qui est intercalée entre des premier et deuxième éléments de fixation 37a, 37b qui le relient à la paroi interne 18b du conduit fluidique 10. Autrement dit, cette membrane 14 est pincée entre ces deux éléments de fixation 37a, 37b. Une telle membrane est agencée pour être :
- perméable aux gaz et établir une communication fluidique depuis l'intérieur du boitier vers l'extérieur lorsque la pression à l'intérieur du boitier excède une valeur prédéterminée, et
- imperméable aux liquides circulant depuis l'extérieur du boitier vers l'intérieur du boitier.

Ainsi dans cette configuration, en présence d'une surpression à l'intérieur du boitier, le fluide F, en l'occurrence l'hélium gazeux vient en contact avec la membrane 14 qui est perméable aux gaz ce qui permet au fluide F de la traverser de circuler dans le conduit fluidique 10 ainsi que le passage fluidique du canal d'évacuation afin d'être évacué à l'extérieur du boitier. On notera que grâce à la présence de cette membrane, les liquides sont stoppés et l'étanchéité du boitier reste assurée. En outre, une telle membrane est composée d'un film en polymère imperméable à l'eau et perméable aux gaz. Typiquement le film polymère est porté par un substrat poreux aux gaz. Avantageusement cette membrane peut être une membrane vendue par la société Gore sous la référence « Acoustic vent GAW331 ».

Ainsi, dans ces différents modes de réalisation, le module de régulation de pression 6a, 6b de cette soupape 1a à 1d permet de réguler les variations de pression à l'intérieur du boitier de montre occasionnées par exemple par la remontée du plongeur à la surface.

En complément, la soupape 1a à 1d peut comprendre un indicateur visuel 38 d'une position axiale de la tête de soupape 2a à 2d relativement au tube 3a à 3d, notamment d'une première ou d'une seconde position axiale de cette tête de soupape 2a à 2d. Un tel indicateur visuel 38 est visible sur la figure 3 relative au deuxième mode de réalisation de la soupape 1b. Cet indicateur visuel 38 peut être une bague qui est agencée dans un logement de forme complémentaire défini dans la paroi externe 18a du tube 3b. Cet indicateur visuel 38 qui a de préférence une couleur qui est différente de celles des parois externes 18a de ce tube 3b et de la tête de soupape 2b, est positionné dans cette paroi externe 18a de manière à être recouvert/découvert par la base de la jupe axiale 5. Ainsi un tel indicateur visuel 38 est susceptible d'être occulté par la base de cette jupe axiale 5 lorsque la tête de soupape 2b est dans la première position axiale et rendu visible lorsque la tête de soupape 2b est dans une position axiale différente de cette première position notamment lorsqu'elle est dans la seconde position axiale en étant découverte en tout ou partie par cette base de la jupe axiale 5.

En référence aux figures 2, 3, 5, 7 et 8, lorsque la soupape de sécurité 1a à 1d est paramétrée de la configuration fermée à la configuration ouverte par l'application d'une force sur la tête de soupape 2a à 2d visant à la dévisser du tube 3a à 3d, le canal d'évacuation de cette soupape 1a à 1d est alors mis en communication fluidique avec l'intérieur du boitier. Dans ce contexte, la tête de soupape 2a à 2d est maintenue fixe notamment radialement grâce aux éléments de blocage 12a, 12b et/ou aux éléments de guidage axial 15. Dans cette configuration, l'excès de fluide F est alors évacué par le canal d'évacuation. Cette évacuation de cet excès de fluide F est décrite par la suite à titre d'exemple pour le mode de réalisation de la soupape 1c visible sur les figures 4, 5 et 8. Plus précisément, sur la figure 8, lors de cette évacuation, cet excès de fluide F quitte le boitier pour pénétrer dans la soupape 1c au niveau de l'entrée 31a comprise dans l'ouverture définie dans la portion inférieure du tube 3c et ce, selon le sens de la flèche référencée 45a. Ce fluide F exerce alors une force de pression sur la face d'appui 34 de l'organe d'activation 9 engendrant alors la compression de l'organe élastique 8 et donc un soulèvement du piston 7. Dans cette configuration, le fluide F circule alors dans le compartiment inférieur 13b de ce conduit 10 selon le sens des flèches référencées 45b avant de pénétrer dans le compartiment supérieur 13a en traversant l'ouverture centrale ménagée dans la portée intérieure 24. Par la suite, selon le sens des flèches référencées 45c et 45d, ce fluide F quitte le compartiment supérieur 13a pour traverser le passage fluidique compris entre la paroi externe 18a de ce tube 3c et la paroi intérieure de la jupe axiale 5 de la tête de soupape 2c jusqu'à la sortie 31b de ce canal d'évacuation comprise entre la paroi intérieure de la base de la jupe axiale 5 et la paroi externe 18a du tube 3c.

Avantageusement, l'étanchéité d'une telle soupape de sécurité 1a à 1d est améliorée du fait que la tête de soupape 2a à 2d est dissociée du module de régulation de pression 6a, 6b rendant ainsi la manipulation de cette tête de soupape 2a à 2d sans incidence sur l'élément d'étanchéité 14 ou le positionnement axial du piston 7. En effet, les soupapes de l'état de la technique sont souvent sujettes à des modifications du positionnement axial du piston lors de manipulations de la tête de soupape à l'origine de fuites de fluide F alors même que la force de pression de ce fluide F est inférieure à la force de pression seuil.

## Revendications

1. Soupape de sécurité (1a, 1b, 1c, 1d) pour pièce d'horlogerie (22), notamment pour une montre de plongée, comprenant un canal d'évacuation agencé pour pouvoir être en communication fluidique avec l'intérieur d'un boitier de ladite pièce d'horlogerie lorsque cette soupape (1a, 1b, 1c, 1d) est dans une configuration ouverte afin d'évacuer un excès de fluide (F), notamment d'un fluide gazeux, ladite soupape (1a, 1b, 1c, 1d) comportant :
- un tube (3a, 3b, 3c, 3d) destiné à être fixé dans le boitier de la pièce d'horlogerie (22) ;
- une tête de soupape (2a, 2b, 2c, 2d) pourvue d'un couvercle (4) et d'une jupe axiale (5) qui est apte à être placée dans différentes positions axiales par rapport audit tube (3a, 3b, 3c, 3d) ;
- un module de régulation de pression (6a, 6b) dissocié de la tête de soupape (2a, 2b, 2c, 2d) agencé à l'intérieur d'un conduit fluidique (10) ménagé dans le tube (3a, 3b, 3c, 3d) ;
- des éléments de guidage axial (15) par vissage définis dans la tête de soupape (2a, 2b, 2c, 2d) et le tube (3a, 3b, 3c, 3d) participant au pilotage du déplacement de la tête de soupape (2a, 2b, 2c, 2d) relativement au tube (3a, 3b, 3c, 3d) dans les différentes positions axiales,
ladite soupape de sécurité (1a, 1b, 1c, 1d) comprenant des éléments de blocage (12a, 12b) empêchant une désolidarisation entre la tête de soupape (2a, 2b, 2c, 2d) et ledit tube (3a, 3b, 3c, 3d), lesquels éléments de blocage (12a, 12b) étant compris dans une paroi externe ou interne (18a, 18b) du tube (3a, 3b, 3c, 3d) et dans la tête de soupape (2a, 2b, 2c, 2d).

2. Soupape (1a, 1b, 1d) selon la revendication 1, **caractérisée en ce que** les éléments de blocage (12a) comprennent une butée (17a) comprise dans la paroi interne (18b) du conduit fluidique (10) dudit tube (3a, 3b, 3d) et un organe de contrôle (17b) de la course de la tête de soupape (2a, 2b, 2d) prévu pour coopérer avec ladite butée (17a) lorsque la tête de soupape (2a, 2b, 2d) est déplacée relativement au tube (3a, 3b, 3d) notamment afin d'empêcher une désolidarisation entre la tête de soupape (2a, 2b, 2d) et ledit tube (3a, 3b, 3d).

3. Soupape (1a, 1b, 1d) selon la revendication précédente, **caractérisée en ce que** l'organe de contrôle (17b) de la course de la tête de soupape (2a, 2b, 2d) est un élément rapporté au corps de la tête de soupape (2a, 2b, 2d) en étant relié mécaniquement à une paroi intérieure (19a) d'un élément central de liaison (16) de la tête de soupape (2a, 2b, 2d).

4. Soupape (1a, 1d) selon l'une des revendications 2 et 3, **caractérisée en ce que** la butée (17a) est venue de matière avec la paroi interne (18b) du conduit fluidique (10) dudit tube (3a, 3d).

5. Soupape (1b) selon l'une des revendications 2 et 3, **caractérisée en ce que** la butée (17a) est comprise dans une pièce rapportée (39) fixée sur la paroi interne (18b) du conduit fluidique (10) dudit tube (3b).

6. Soupape (1c) selon la revendication 1, **caractérisée en ce que** les éléments de blocage (12b) sont compris dans la paroi externe (18a) du tube (3c) et dans la jupe axiale (5) de la tête de soupape (2c).

7. Soupape (1c) selon l'une des revendications 1 et 6, **caractérisée en ce que** les éléments de blocage (12b) comprennent une bague de maintien (17c) de forme annulaire et un épaulement circulaire (17d), ledit épaulement (17d) étant pourvu d'une surface d'appui contre laquelle ladite bague (17c) est susceptible de venir en buté.

8. Soupape (1c) selon la revendication précédente, **caractérisée en ce que** la bague de maintien (17c) est comprise dans :
- une rainure (41) de forme complémentaire définie dans la jupe axiale (5) lorsque l'épaulement circulaire (17d) est compris dans la paroi externe (18a) du tube (3c), ou
- une rainure de forme complémentaire définie dans la paroi externe (18a) du tube (3c) lorsque l'épaulement circulaire (17d) est compris dans la jupe axiale (5).

9. Soupape (1a, 1c, 1d) selon l'une des revendications 1 à 8, **caractérisée en ce que** les éléments de guidage axial (15) comprennent des première et deuxième zones de guidage (11a, 11b) définies en tout ou partie respectivement dans une paroi extérieure (19b) d'un élément central de liaison (16) compris dans le couvercle (4) de la tête de soupape (2a, 2c, 2d) et dans la paroi interne (18b) du conduit fluidique (10) du tube (3a, 3c, 3d) notamment dans un compartiment supérieur (13a) de ce conduit (10).

10. Soupape (1b) selon l'une des revendications 1 à 8, **caractérisée en ce que** les éléments de guidage axial (15) comprennent des première et deuxième zones de guidage (11a, 11b) définies en tout ou partie respectivement dans une paroi extérieure (19b) d'un élément central de liaison (16) compris dans le couvercle (4) de la tête de soupape (2b) et dans une pièce rapportée (39) fixée sur une paroi interne (18b) du conduit fluidique (10) dudit tube (3b) notamment dans un compartiment supérieur (13a) de ce conduit (10).

11. Soupape (1a, 1b, 1c, 1d) selon l'une des revendications 9 et 10, **caractérisée en ce que** les première et deuxième zones de guidage (11a, 11b) sont aptes à être en prise par vissage pour une configuration ouverte ou fermée de ladite soupape (1a, 1b, 1c, 1d).

12. Soupape (1a, 1b, 1c) selon l'une des revendications 1 à 11, **caractérisée** que le module de régulation de pression (6a) comprend un piston (7) et un organe élastique (8), ledit piston (7) étant logé à l'intérieur du conduit fluidique (10) du tube (3a, 3b, 3c) et l'organe élastique (8) étant agencé dans ledit conduit fluidique (10) afin de coopérer avec le piston (7), lequel piston (7) étant configuré pour se déplacer axialement au gré des variations de pression à l'intérieur du boitier.

13. Soupape (1d) selon l'une des revendications 1 à 11, **caractérisée** que le module de régulation de pression (6b) comprend un élément d'étanchéité (14) situé dans le conduit fluidique (10) entre des premier et deuxième éléments de fixation (37a, 37b), ledit élément d'étanchéité (14) comportant une membrane agencée pour être perméable aux gaz et établir une communication fluidique depuis l'intérieur du boitier vers l'extérieur lorsque ladite pression interne excède une valeur prédéterminée et imperméable aux liquides circulant depuis l'extérieur du boitier vers l'intérieur du boitier.

14. Soupape (1a, 1b, 1c, 1d) selon l'une des revendications 1 à 13, **caractérisée** qu'elle comprend un indicateur visuel (38) d'une positon axiale de la tête de soupape (2a, 2b, 2c, 2d) relativement au tube (3a, 3b, 3c, 3d), notamment d'une première ou d'une seconde position axiale de cette tête de soupape (2a, 2b, 2c, 2d).

15. Pièce d'horlogerie (22) comprenant une soupape (1a, 1b, 1c, 1d) selon l'une quelconque des revendications 1 à 14.

## Patentansprüche

1. Sicherheitsventil (1a, 1b, 1c, 1d) für ein Uhrmachereiteil (22), insbesondere für eine Taucheruhr, umfassend einen Ableitkanal, der angeordnet ist, um in Fluidkommunikation mit dem Inneren einer Schale des Uhrmachereiteils zu treten, wenn sich dieses Ventil (1a, 1b, 1c, 1d) in einer offenen Ausgestaltung befindet, um überschüssiges Fluid (F) abzuleiten, insbesondere ein gasförmiges Fluid, wobei das Ventil (1a, 1b, 1c, 1d) umfasst:
- ein Rohr (3a, 3b, 3c, 3d), das dazu bestimmt ist, in der Schale des Uhrmachereiteils (22) fixiert zu werden;
- einen Ventilkopf (2a, 2b, 2c, 2d), der mit einem Deckel (4) und einer axialen Schürze (5) versehen ist, die geeignet ist, in unterschiedliche axiale Positionen in Bezug auf das Rohr (3a, 3b, 3c, 3d) gestellt zu werden;
- ein Druckregelmodul (6a, 6b), das nicht zum Ventilkopf (2a, 2b, 2c, 2d) gehört, das im Inneren eines Fluidleiters (10) angeordnet ist, der in dem Rohr (3a, 3b, 3c, 3d) eingerichtet ist;
- Elemente zur axialen Führung (15) mittels Verschraubung, die in dem Ventilkopf (2a, 2b, 2c, 2d) und dem Rohr (3a, 3b, 3c, 3d) definiert sind, die zu der Steuerung der Verschiebung des Ventilkopfs (2a, 2b, 2c, 2d) in Bezug auf das Rohr (3a, 3b, 3c, 3d) in die unterschiedlichen axialen Positionen beitragen,
wobei das Sicherheitsventil (1a, 1b, 1c, 1d) Sperrelemente (12a, 12b) umfasst, die eine Trennung zwischen dem Ventilkopf (2a, 2b, 2c, 2d) und dem Rohr (3a, 3b, 3c, 3d) verhindern, wobei die Sperrelemente (12a, 12b) in einer Außen- oder Innenwand (18a, 18b) des Rohrs (3a, 3b, 3c, 3d) und in dem Ventilkopf (2a, 2b, 2c, 2d) umfasst sind.

2. Ventil (1a, 1b, 1d) nach Anspruch 1, **dadurch gekennzeichnet, dass** die Sperrelemente (12a) einen Anschlag (17a) umfassen, der in der Innenwand (18b) des Fluidleiters (10) des Rohrs (3a, 3b, 3d) umfasst ist, und ein Kontrollorgan (17b) des Hubs des Ventilkopfs (2a, 2b, 2d), das vorgesehen ist, um mit dem Anschlag (17a) zusammenzuwirken, wenn der Ventilkopf (2a, 2b, 2d) in Bezug auf das Rohr (3a, 3b, 3d) verschoben wird, insbesondere um eine Trennung zwischen dem Ventilkopf (2a, 2b, 2d) und dem Rohr (3a, 3b, 3d) zu verhindern.

3. Ventil (1a, 1b, 1d) nach dem vorstehenden Anspruch, **dadurch gekennzeichnet, dass** das Kontrollorgan (17b) des Hubs des Ventilkopfs (2a, 2b, 2d) ein Element ist, das an den Körper des Ventilkopfs (2a, 2b, 2d) angefügt ist, indem es mit einer Innenwand (19a) eines mittleren Verbindungselements (16) des Ventilkopfs (2a, 2b, 2d) mechanisch verbunden ist.

4. Ventil (1a, 1d) nach einem der Ansprüche 2 und 3, **dadurch gekennzeichnet, dass** der Anschlag (17a) einstückig mit der Innenwand (18b) des Fluidleiters (10) des Rohrs (3a, 3d) gebildet ist.

5. Ventil (1b) nach einem der Ansprüche 2 und 3, **dadurch gekennzeichnet, dass** der Anschlag (17a) in einem angefügten Teil (39) umfasst ist, das auf der Innenwand (18b) des Fluidleiters (10) des Rohrs (3b) fixiert ist.

6. Ventil (1c) nach Anspruch 1, **dadurch gekennzeichnet, dass** die Sperrelemente (12b) in der Außenwand (18a) des Rohrs (3c) und in der axialen Schürze (5) des Ventilkopfs (2c) umfasst sind.

7. Ventil (1c) nach einem der Ansprüche 1 und 6, **dadurch gekennzeichnet, dass** die Sperrelemente (12b) einen ringförmigen Haltering (17c) und eine kreisförmige Schulter (17d) umfassen, wobei die Schulter (17d) mit einer Auflagefläche versehen ist, gegen welche der Ring (17c) anliegen soll.

8. Ventil (1c) nach dem vorstehenden Anspruch, **dadurch gekennzeichnet, dass** der Haltering (17c) umfasst ist in:
- einer Nut (41) komplementärer Form, die in der axialen Schürze (5) definiert ist, wenn die kreisförmige Schulter (17d) in der Außenwand (18a) des Rohrs (3c) umfasst ist, oder
- einer Nut komplementärer Form, die in der Außenwand (18a) des Rohrs (3c) definiert ist, wenn die kreisförmige Schulter (17d) in der axialen Schürze (5) umfasst ist.

9. Ventil (1a, 1c, 1d) nach einem der Ansprüche 1 bis 8, **dadurch gekennzeichnet, dass** die axialen Führungselemente (15) erste und zweite Führungszonen (11a, 11b) umfassen, die jeweils zur Gänze oder teilweise in einer Außenwand (19b) eines mittleren Verbindungselements (16) definiert sind, das in dem Deckel (4) des Ventilkopfs (2a, 2c, 2d) umfasst ist, und in der Innenwand (18b) des Fluidleiters (10) des Rohrs (3a, 3c, 3d), insbesondere in einem oberen Fach (13a) dieses Leiters (10).

10. Ventil (1b) nach einem der Ansprüche 1 bis 8, **dadurch gekennzeichnet, dass** die axialen Führungselemente (15) erste und zweite Führungszonen (11a, 11b) umfassen, die jeweils zur Gänze oder teilweise in einer Außenwand (19b) eines mittleren Verbindungselements (16) definiert sind, das in dem Deckel (4) des Ventilkopfs (2b) umfasst ist, und in einem angefügten Teil (39), das auf einer Innenwand (18b) des Fluidleiters (10) des Rohrs (3b), insbesondere in einem oberen Fach (13a) dieses Leiters (10) fixiert ist.

11. Ventil (1a, 1b, 1c, 1d) nach einem der Ansprüche 9 und 10, **dadurch gekennzeichnet, dass** die ersten und zweiten Führungszonen (11a, 11b) geeignet sind, für eine offene oder geschlossene Ausgestaltung des Ventils (1a, 1 b, 1c, 1d) durch Verschraubung ineinander zu greifen.

12. Ventil (1a, 1b, 1c) nach einem der Ansprüche 1 bis 11, **dadurch gekennzeichnet, dass** das Druckregelmodul (6a) einen Kolben (7) und ein elastisches Organ (8) umfasst, wobei der Kolben (7) im Inneren des Fluidleiters (10) des Rohrs (3a, 3b, 3c) untergebracht ist und das elastische Organ (8) in dem Fluidleiter (10) angeordnet ist, um mit dem Kolben (7) zusammenzuwirken, wobei der Kolben (7) ausgestaltet ist, sich axial je nach Druckvariationen im Inneren der Schale zu verschieben.

13. Ventil (1d) nach einem der Ansprüche 1 bis 11, **dadurch gekennzeichnet, dass** das Druckregelmodul (6b) ein Dichtungselement (14) umfasst, das sich im Fluidleiter (10) zwischen ersten und zweiten Befestigungselementen (37a, 37b) befindet, wobei das Dichtungselement (14) eine Membran aufweist, die angeordnet ist, um für die Gase durchlässig zu sein und eine Fluidkommunikation aus dem Inneren der Schale nach außen herzustellen, wenn der innere Druck einen vorbestimmten Wert überschreitet, und undurchlässig für die Flüssigkeiten, die von außerhalb der Schale in das Innere der Schale zirkulieren.

14. Ventil (1a, 1b, 1c, 1d) nach einem der Ansprüche 1 bis 13, **dadurch gekennzeichnet, dass** es eine visuelle Anzeige (38) einer axialen Position des Ventilkopfs (2a, 2b, 2c, 2d) in Bezug auf das Rohr (3a, 3b, 3c, 3d) umfasst, insbesondere einer ersten oder einer zweiten axialen Position dieses Ventilkopfs (2a, 2b, 2c, 2d).

15. Uhrmachereiteil (22), umfassend ein Ventil (1a, 1b, 1c, 1d) nach einem der Ansprüche 1 bis 14.

## Claims

1. Escape valve (1a, 1b, 1c, 1d) for a timepiece (22), in particular for a diver's watch, comprising an outlet channel arranged to be in fluid communication with the interior of a case of said timepiece when this valve (1a, 1b, 1c, 1d) is in an open configuration in order to evacuate an excess of fluid (F), in particular a gaseous fluid, said valve (1a, 1b, 1c, 1d) containing:
- a tube (3a, 3b, 3c, 3d) intended to be fixed in the case of the timepiece (22);
- a valve head (2a, 2b, 2c, 2d) provided with a cover (4) and with an axial skirt (5) which is adapted to be placed in different axial positions in relation to said tube (3a, 3b, 3c, 3d);
- a pressure control module (6a, 6b) separate from the valve head (2a, 2b, 2c, 2d) arranged in the interior of a fluid conduit (10) provided in the tube (3a, 3b, 3c, 3d);
- axial guide elements (15) by screwing defined in the valve head (2a, 2b, 2c, 2d) and the tube (3a, 3b, 3c, 3d) playing a part in the control of the displacement of the valve head (2a, 2b, 2c, 2d) relative to the tube (3a, 3b, 3c, 3d) in the different axial positions,
said escape valve (1a, 1b, 1c, 1d) comprising blocking elements (12a, 12b) preventing a disassociation between the valve head (2a, 2b, 2c, 2d) and said tube (3a, 3b, 3c, 3d), said blocking elements (12a, 12b) being included in an external wall or internal wall (18a, 18b) of the tube (3a, 3b, 3c, 3d) and in the valve head (2a, 2b, 2c, 2d).

2. Valve (1a, 1b, 1d) according to Claim 1, **characterized in that** the blocking elements (12a) include an abutment (17a) included in the internal wall (18b) of the fluid conduit (10) of said tube (3a, 3b, 3d) and a means of controlling (17b) the course of the valve head (2a, 2b, 2d) intended to cooperate with said abutment (17a) when the valve head (2a, 2b, 2d) is displaced relative to tube (3a, 3b, 3d) in particular in order to prevent a disassociation between the valve head (2a, 2b, 2d) and said tube (3a, 3b, 3d).

3. Valve (1a, 1b, 1d) according to the preceding Claim, **characterized in that** the means of controlling (17b) the course of the valve head (2a, 2b, 2d) is an element inserted in the body of the valve head (2a, 2b, 2d) by being connected mechanically to an interior wall (19a) of a central element for connecting (16) the valve head (2a, 2b, 2d).

4. Valve (1a, 1d) according to one of Claims 2 and 3, **characterized in that** the abutment (17a) is integrally formed with the internal wall (18b) of the fluid conduit (10) of said tube (3a, 3d).

5. Valve (1b) according to one of Claims 2 and 3, **characterized in that** the abutment (17a) is included in an insert (39) fixed on the internal wall (18b) of the fluid conduit (10) of said tube (3b).

6. Valve (1c) according to Claim 1, **characterized in that** the blocking elements (12b) are included in the external wall (18a) of the tube (3c) and in the axial skirt (5) of the valve head (2c).

7. Valve (1c) according to one of Claims 1 and 6, **characterized in that** the blocking elements (12b) include a retaining ring (17c) of annular form and a circular shoulder (17d), said shoulder (17d) being provided with a bearing surface against which said ring (17c) is likely to come into abutment.

8. Valve (1c) according to the preceding Claim, **characterized in that** the retaining ring (17c) is included in:
- a groove (41) of complementary form defined in the axial skirt (5) when the circular shoulder (17d) is included in the external wall (18a) of the tube (3c), or
- a groove of complementary form defined in the external wall (18a) of the tube (3c) when the circular shoulder (17d) is included in the axial skirt (5).

9. Valve (1a, 1c, 1d) according to one of Claims 1 to 8, **characterized in that** the axial guide elements (15) include first and second guide zones (11a, 11b) defined in whole or in part respectively in an external wall (19b) of a central connecting element (16) included in the cover (4) of the valve head (2a, 2c, 2d) and in the internal wall (18b) of the fluid conduit (10) of the tube (3a, 3c, 3d) in particular in an upper compartment (13a) of this conduit (10).

10. Valve (1b) according to one of Claims 1 to 8, **characterized in that** the axial guide elements (15) include first and second guide zones (11a, 11b) defined in whole or in part respectively in an external wall (19b) of a central connecting element (16) included in the cover (4) of the valve head (2b) and in an insert (39) fixed on an internal wall (18b) of the fluid conduit (10) of said tube (3b) in particular in an upper compartment (13a) of this conduit (10).

11. Valve (1a, 1b, 1c, 1d) according to one of Claims 9 and 10, **characterized in that** the first and second guide zones (11a, 11b) are adapted to be in engagement by screwing for an open or closed configuration of said valve (1a, 1b, 1c, 1d).

12. Valve (1a, 1b, 1c) according to one of Claims 1 to 11, **characterized in that** the pressure control module (6a) includes a piston (7) and an elastic member (8), said piston (7) being housed in the interior of the fluid conduit (10) of the tube (3a, 3b, 3c) and the elastic member (8) being arranged in said fluid conduit (10) in order to cooperate with the piston (7), said piston (7) being configured in order to move axially depending on the variations of pressure in the interior of the case.

13. Valve (1d) according to one of Claims 1 to 11, **characterized in that** the pressure control module (6b) includes a sealing element (14) situated in the fluid conduit (10) between first and second fastening components (37a, 37b), said sealing element (14) containing a membrane arranged to be permeable to the gases and to establish a fluid communication from the interior of the case towards the exterior when said internal pressure exceeds a predetermined value and impermeable to the liquids circulating from the exterior of the case towards the interior of the case.

14. Valve (1a, 1b, 1c, 1d) according to one of Claims 1 to 13, **characterized in that** it includes a visual indicator (38) of an axial position of the valve head (2a, 2b, 2c, 2d) relative to the tube (3a, 3b, 3c, 3d), in particular from a first or from a second axial position of this valve head (2a, 2b, 2c, 2d).

15. Timepiece (22) comprising a valve (1a, 1b, 1c, 1d) according to any one of Claims 1 to 14.
